# EUROPÄISCHE PATENTANMELDUNG

(11) **EP 1 184 958 A2**
(43) Veröffentlichungstag der Anmeldung: **06.03.2002**
(21) Anmeldenummer: 01119406.5
(22) Anmeldetag: 11.08.2001
(51) Int. Cl.: H02K 5/04, H02K 15/14

(54) **Antriebseinrichtung**

(30) Priorität: 30.08.2000 DE 10042505
(71) Anmelder: Valeo Auto-Electric Wischer und Motoren GmbH, 74321 Bietigheim-Bissingen (DE)
(72) Erfinder: Blind, Wolfgang, 74321 Bietigheim-Bissingen (DE)
(74) Vertreter: Jahn, Wolf-Diethart

(57) **Zusammenfassung**

Die Erfindung betrifft eine Antriebseinrichtung mit einem Elektromotor und einem Getriebe, mit einem Motorgehäuse und mit einem Getriebegehäuse, wobei das Motor- bzw. Getriebegehäuse wenigstens zwei Stemmlappen aufweist, deren freien Enden zur Verbindung des Motor- bzw. Getriebegehäuses mit dem Getriebe- bzw. Motorgehäuse in eine an dem Getriebe- bzw. Motorgehäuse vorhandene Stemmaussparung gestemmt sind.

Die Erfindung kennzeichnet sich dadurch, dass im Bereich der Stemmaussparung zur Aufnahme von radialen Kräften Abstützkanten vorhanden sind, an welchen sich Kanten der Stemmlappen abstützen.

## Beschreibung

Die Erfindung betrifft eine Antriebsvorrichtung mit einem Elektromotor und einem Getriebe, mit einem Motorgehäuse und mit einem Getriebegehäuse, wobei das Motor- bzw. Getriebegehäuse wenigstens zwei Stemmlappen aufweist, deren freie Enden zur Verbindung des Motor- bzw. Getriebegehäuses mit dem Getriebe- bzw. Motorgehäuse in an dem Getriebe- bzw. Motorgehäuse vorhandene Stemmaussparungen gestemmt sind.

Derartige Antriebseinrichtung sind seit langem bekannt und finden bspw. als Stellmotoren im Kraftfahrzeugbereich Verwendung. Bei der Montage derartiger Antriebseinrichtungen wird hierbei bekanntermaßen das Motorgehäuse axial auf das Getriebe aufgeschoben, wobei das Getriebegehäuse einen Ringbund aufweist, an welchem die Stirnseite des vorzugsweise kreisförmig ausgebildeten Motorgehäuses anstößt. Dabei wird das Motorengehäuse axial auf das Getriebegehäuse gepresst. Durch die Presspassung können hohe radiale Kräfte übertragen werden. Um auch eine axiale Sicherung des Motorengehäuses an dem Getriebegehäuse zu gewährleisten, werden in einem nächsten Arbeitsschritt die Stemmlappen, die vorzugsweise an dem Motorengehäuse angeordnet sind, in an dem Getriebegehäuse vorhandene Stemmaussparungen gestemmt bzw. gedrückt. Die Verstemmung der freien Enden der insbesondere einander zugewandten Kanten der beiden Stemmlappen erfolgt hierbei in axialer Richtung. D. h., die einander zugewandten freien Enden der Stemmlappen werden in die dafür vorgesehenen Stemmaussparungen gestemmt bzw. gedrückt.

Ein derartiger Stand der Technik hat allerdings den Nachteil, dass zur Montage der Antriebseinrichtung zwei Arbeitsschritte, nämlich zum einen das Presspassen und zum anderen das Verstemmen, erforderlich sind. Außerdem sind relativ genaue Toleranzen, insbesondere zur Realisierung der Presspassung, erforderlich. Aufgrund der Presspassung wird außerdem das Motorengehäuse ungünstig beansprucht, weshalb es zu Aufweitungen oder Rissen in dem Motorengehäuse kommen kann. Diese Aufweitungen und Risse beeinträchtigen die Funktionsfähigkeit derartiger Antriebseinrichtungen.

Der vorliegenden Erfindung liegt deshalb die Aufgabe zugrunde, eine Antriebseinrichtung bereitzustellen, welche den vorstehenden Nachteilen des Standes der Technik abhilft.

Diese Aufgabe wird bei einer Antriebseinrichtung der eingangs genannten Art erfindungsgemäß dadurch gelöst, dass im Bereich der Stemmaussparung zur Aufnahme von radialen Kräften Abstützkanten vorhanden sind, an welchen sich Kanten der Stemmlappen abstützen. Aufgrund einer derartigen Anordnung kann vorteilhafterweise auf eine Presspassung des Motorengehäuses und des Getriebegehäuses verzichtet werden. Erfindungsgemäß können aufgrund der Verstemmung der Stemmlappen nicht nur axiale Kräfte aufgenommen werden, sondern auch radiale. Der Kraftfluss von radialen Kräften wird hierbei über die erfindungsgemäß vorgesehenen Abstützkanten und den sich daran abstützenden Kanten der Stemmlappen geführt. Erfindungsgemäßen Antriebseinrichtungen stellen demnach gegenüber dem Stand der Technik eine erhebliche Vereinfachung des Montagevorgangs dar.

Eine Weiterbindung der Erfindung kennzeichnet sich dadurch, dass die Abstützkanten im Wesentlichen in Richtung der Motorlängsachse verlaufen und dass die in Richtung der Motorlängsachse verlaufenden, einander abgewandten Kanten der Stemmlappen sich an den Abstützkanten abstützen. Hierdurch können Radialkräfte in besonders geeigneter Weise aufgenommen werden. Allerdings ist auch denkbar, dass die Abstützkanten nicht axial, sondern schräg zur Motorenlängsachse verlaufen. Entsprechend schräg können dann die zur Abstützung an den Abstützkanten vorgesehenen Kanten der Stemmlappen angeordnet sein.

Bei einer Ausgestaltung der Erfindung ragen die Stemmlappen über die dem Getriebegehäuse bzw. Motorengehäuse zugewandte Stirnseite des Motorengehäuses bzw. des Getriebegehäuses. Hierbei wird ein sicheres Anliegen der einander abgewandten Kanten der Stemmlappen an den entsprechenden Abstützkanten gewährleistet. Außerdem wird dadurch ermöglicht, die Stemmlappen unabhängig von der Gestaltung des Getriebegehäuses auszubilden. Insbesondere können geeignet große Ausmaße der Stemmlappen gewählt werden, welche verstemmt werden können, ohne dass die Gefahr besteht, dass aufgrund des Verstemmvorganges Bruchstellen oder Risse in den Stemmlappen auftreten.

Um ein in Motorenlängsachse verlaufendes spielfreies Verbinden des Motorengehäuses mit dem Getriebegehäuse zu erreichen, kann erfindungsgemäß vorgesehen sein, dass die Stemmaussparung eine quer zur Motorlängsachse verlaufende Rampe aufweist, entlang der sich die dem Motor- bzw. Getriebegehäuse zugewandten Kanten der Stemmlappen abstützen. Hierbei wird beim Stemmvorgang, bei welchem die entsprechenden Kanten der Stemmlappen entlang der Rampe nieder gedrückt werden, das Motorengehäuses vollständig und satt auf das Getriebegehäuse aufgeschoben und das Motoren- mit dem Getriebegehäuse verspannt. Eine derartige Verbindung des Motorengehäuses mit dem Getriebegehäuse hat den Vorteil, dass auch axial auf die Antriebseinrichtung wirkende Kräfte aufgenommen werden können.

Um eine dauerhafte, günstige und funktionssichere Verstemmverbindung zwischen dem Getriebegehäuse mit dem Motorengehäuse zu erreichen, hat sich gezeigt, dass der Abstand der einander zugewandten Kanten der Stemmlappen etwa das 1,5-fache der Materialstärke der Stemmlappen betragen sollte. Weiterhin hat sich als vorteilhaft ergeben, wenn die freien Enden der Stemmlappen etwa materialstärketief in die Stemmaussparung gestemmt werden. Hierdurch wird eine optimale Stemmverbindung erreicht. Weniger tiefes Verstemmen kann eine nicht dauerhaft funktionssichere Verstemmverbindung zur Folge haben. Werden hingegen die Stemmlappen zu tief in die Stemmaussparung gedrückt, so können sich an den Stemmlappen Haarrisse bilden, welche beim späteren Betrieb der Antriebseinrichtung sich negativ auf die Verbindung des Motorengehäuses mit dem Getriebegehäuse auswirken können.

Bei einer besonders bevorzugten Ausgestaltung der Erfindung ist vorgesehen, dass die Stemmverbindung lösbar, insbesondere durch Aufbiegen der Stemmlappen, ausgestaltet ist. Eine derartige Antriebseinrichtung hat dabei den Vorteil, dass ein Recyclen der Antriebseinrichtung durch Trennen des Motorengehäuses von dem Getriebegehäuse ermöglicht wird. Gemäß dem Stand der Technik ist ein Trennen des Getriebegehäuses von dem Motorengehäuse insbesondere aufgrund der Presspassung nicht möglich. Da regelmäßig das Getriebegehäuse aus einem anderen Material ist, bspw. aus Zinkdruckguss, wie das Motorengehäuse, welches insbesondere aus Stahlblech hergestellt ist, ist ein gemeinsames Verschrotten von Motoren- und Getriebegehäuse umwelttechnisch problematisch.

Vorteilhafterweise kann vorgesehen sein, dass das Getriebegehäuse einen Ringbund zur Anlage der Stirnseite des Motorengehäuses aufweist, wobei der Ringbund im Bereich der Stemmaussparung ausgespart ist und die an die Stemmaussparung angrenzenden Bereiche des Ringbundes die Abstützkanten bilden.

Eine derartige Ausgestaltung der Erfindung ist auf einfache Art und Weise realisierbar und hat sich in der Praxis als besonders vorteilhaft erwiesen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1: eine erfindungsgemäße Antriebseinrichtung in Draufsicht,
- Fig. 2: einen Ausschnitt der Fig. 1 entlang der Ansicht II-II und
- Fig. 3: einen Ausschnitt der Fig. 1 entlang der Ansicht III-III.

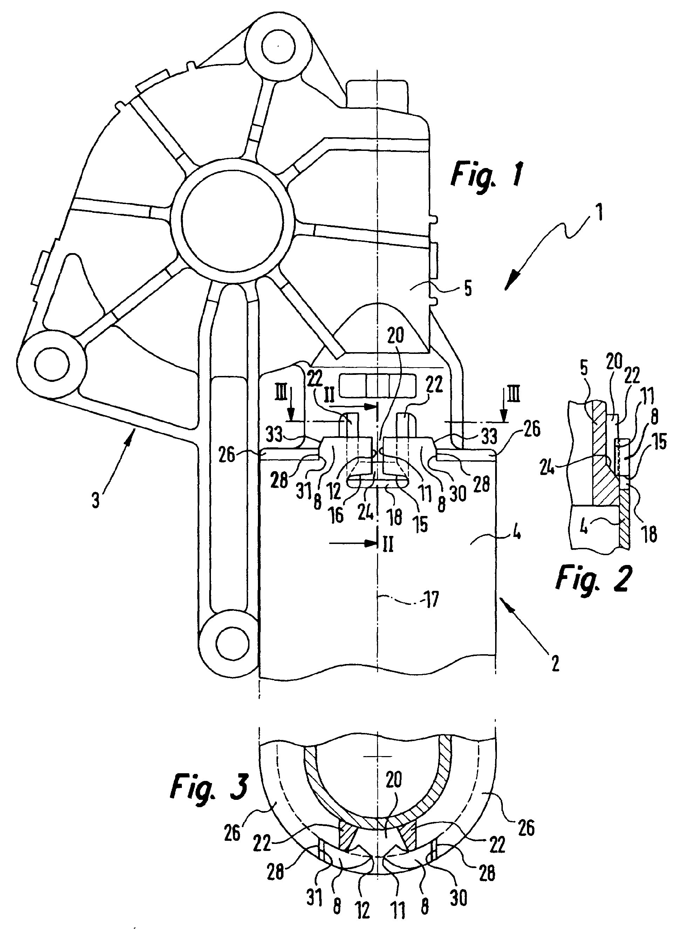

In der Fig. 1 ist eine Antriebseinrichtung 1 dargestellt, die im Wesentlichen aus einem Elektromotor 2 und einem Getriebe 3, insbesondere einem Schneckengetriebe besteht. In der dargestellten Ansicht ist ein Motorgehäuse 4 sowie ein Getriebegehäuse 5 deutlich zu erkennen. Das im Wesentlichen zylindrisch ausgebildete Motorgehäuse 4 weist hierbei an seiner dem Getriebegehäuse 5 zugewandten Stirnseite zwei Stemmlappen 8 auf. Bei der in der Fig. 1 - 3 gezeigten Ausführungsform der Erfindung ragen die Stemmlappen 8 über die dem Getriebegehäuse 5 zugewandte Stirnseite des Motorengehäuses 4. Die einander zugewandten Kanten 11 und 12 der Stemmlappen 8 weisen vorzugsweise einen Abstand von ca. dem 1,5-fachen der Materialstärke der Stemmlappen 8 auf. Im Bereich der dem Getriebegehäuse 5 abgewandten Kanten 15 und 16 der Stemmlappen 8 erstreckt sich im Motorengehäuse 4 eine quer zur Motorenlängsachse 17 verlaufende Aussparung 18.

Wie insbesondere aus Fig. 2 und 3 deutlich zu erkennen ist, weist das Motorengehäuse im Bereich der Stemmlappen 8 eine Stemmaussparung 20 auf. In diese Stemmaussparung werden die Kanten 11 und 12 der Stemmlappen 8 gedrückt, wodurch das Motorengehäuse 4 mit dem Getriebegehäuse 5 verstemmt wird. Die Stemmaussparung 20 wird hierbei von zwei sich in Längsrichtung des Motors 4 erstreckenden Stegen 22 begrenzt. An dem dem Elektromotor 2 zugewandten Bereich der Stemmaussparung 20 sind die beiden Stege 22 über eine quer zur Motorlängsachse 17 verlaufende Rampe 24 miteinander verbunden.

Aus Fig. 1 wird deutlich, dass das Getriebegehäuse 5 einen Ringbund 26 zur Anlage der Stirnseite des Motorengehäuses 4 aufweist. Der Ringbund 26 ist im Bereich der Stemmaussparung 20 und der Stemmlappen 8 ausgespart. Die an die Stemmaussparung 20 bzw. an die Stemmlappen 8 angrenzenden Bereiche des Ringbundes 26 bilden hierbei in Richtung der Motorenlängsachse 17 verlaufende Abstützkanten 28, an welchen sich die in Richtung der Motorenlängsachse 17 verlaufenden, einander abgewandte Kanten 30 und 31 der Stemmlappen 8 abstützen.

Zur Verbindung des Motorengehäuses 4 mit dem Getriebegehäuse wird das Motorengehäuse 4 axial in Richtung der Motorenlängsachse 17 auf das Getriebegehäuse 5 aufgeschoben. Hierbei stößt die dem Getriebegehäuse 5 zugewandte Stirnseite des Motorengehäuses 4 gegen den Ringbund 26. Da der Ringbund 26 im Bereich der Stemmlappen 8 ausgespart ist und die Stemmlappen 8 über die Stirnseite des Motorengehäuses 4 ragen, überragen die Stemmlappen 8 ebenfalls den Ringbund 26. Um ein erleichtertes Einführen der Stemmlappen 8 in die Aussparung des Ringbundes 26 zu ermöglichen, weisen die Stemmlappen 8 Anfasungen 33 auf.

In einem nächsten Arbeitsschritt werden die einander zugewandten Kanten 11 und 12 der Stemmlappen 8 in die Stemmaussparung 20 gedrückt. Hierbei gleiten die dem Getriebegehäuse 5 abgewandten Kanten 15 und 16 der Stemmlappen 8 entlang der Rampe 24, wodurch das Motorengehäuse 4 mit dem Getriebegehäuse 5 axial verspannt wird. Außerdem werden, mit dieser Verspannung einhergehend, die einander abgewandten, sich in axialer Richtung erstreckenden Kanten 30 und 31 der Stemmlappen 8 gegen die Abstützkanten 28 des Ringbundes 26 des Getriebegehäuses 5 gedrückt. Hierdurch wird eine Radialkräfte aufnehmende Verbindung des Getriebegehäuses 5 mit dem Motorengehäuse 4 hergestellt.

Wie aus Fig. 3 deutlich wird, werden die einander zugewandten, freien Enden 11 und 12 der Stemmlappen 8 etwa materialstärketief in die Stemmaussparung 20 gedrückt.

Die beschriebene Antriebseinrichtung hat den Vorteil, dass in lediglich einem Montageschritt, nämlich dem Verstemmen, eine Radial- als auch Axialkräfte aufnehmende Verbindung des Getriebegehäuses 5 mit dem Motorengehäuse 4 realisiert ist.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Antriebseinrichtung (1) mit einem Elektromotor (2) und einem Getriebe (3), mit einem Motorgehäuse (4) und mit einem Getriebegehäuse (5), wobei das Motor- bzw. Getriebegehäuse (4 bzw. 5) wenigstens zwei Stemmlappen (8) aufweist, deren freien Enden (11, 12) zur Verbindung des Motor- bzw. Getriebegehäuses (4 bzw. 5) mit dem Getriebe- bzw. Motorgehäuse (5 bzw. 4) in eine an dem Getriebe- bzw. Motorgehäuse (5 bzw. 4) vorhandene Stemmaussparung (20) gestemmt sind, **dadurch gekennzeichnet, dass** im Bereich der Stemmaussparung (20) zur Aufnahme von radialen Kräften Abstützkanten (28) vorhanden sind, an welchen sich Kanten (30, 31) der Stemmlappen (8) abstützen.

2. Antriebseinrichtung (1) nach Anspruch 1, **dadurch gekennzeichnet, dass** die Abstützkanten (28) im Wesentlichen in Richtung der Motorlängsachse (17) verlaufen und dass die in Richtung der Motorlängsachse (17) verlaufenden, einander abgewandten Kanten der Stemmlappen (8) sich an den Abstützkanten (28) abstützen.

3. Antriebseinrichtung nach Anspruch 1 oder 2, **dadurch gekennzeichnet, dass** die Stemmlappen (8) über die dem Getriebe- bzw. dem Motorgehäuse (5 bzw. 4) zugewandte Stirnseite des Motor- bzw. des Getriebegehäuses (4 bzw. 5) ragen.

4. Antriebseinrichtung (1) nach Anspruch 1, 2 oder 3, **dadurch gekennzeichnet, dass** die Stemmaussparung (20) eine quer zur Motorlängsachse (17) verlaufende Rampe (24) aufweist, entlang derer sich die dem Motor- bzw. Getriebegehäuse (4 bzw. 5) zugewandten Kanten (15, 16) der Stemmlappen (8) abstützen.

5. Antriebseinrichtung (1) nach einem der vorhergehenden Ansprüche, **dadurch gekennzeichnet, dass** der Abstand der einander zugewandten Kanten (11, 12) der Stemmlappen (8) etwa das 1,5 fache der Materialstärke der Stemmlappen (8) beträgt.

6. Antriebseinrichtung (1) nach einem der vorhergehenden Ansprüche, **dadurch gekennzeichnet, dass** die freien Enden (11, 12) der Stemmlappen (8) etwa Materialstärke tief in die Stemmaussparung (20) gestemmt werden.

7. Antriebseinrichtung (1) nach einem der vorhergehenden Ansprüche, **dadurch gekennzeichnet, dass** die Stemmverbindung lösbar, insbesondere durch Aufbiegen der Stemmlappen (8), ausgestaltet ist.

8. Antriebseinrichtung (1) nach einem der vorhergehenden Ansprüche, **dadurch gekennzeichnet, dass** das Getriebegehäuse (5) einen Ringbund (26) zur Anlage der Stirnseite des Motorengehäuses (4) aufweist, wobei der Ringbund (26) im Bereich der Stemmaussparung (20) ausgespart ist und die an die Stemmaussparung (20) angrenzenden Bereiche des Ringbundes (26) die Abstützkanten (28) bilden.
